# EUROPEAN PATENT APPLICATION

(11) **EP 4 376 159 A1**
(43) Date of publication of application: **29.05.2024**
(21) Application number: 23784967.4
(22) Date of filing: 04.04.2023
(51) Int. Cl.: H01M 10/42, H01M 50/586, H01M 4/139, H01M 10/052, H01M 50/531, H01M 4/02

(54) **INSULATING LAYER COMPOSITION FOR LITHIUM SECONDARY BATTERY AND LITHIUM SECONDARY BATTERY COMPRISING SAME**

(30) Priority: 04.04.2022 KR 20220041893
(71) Applicant: LG Chem, Ltd., Yeongdeungpo-gu Seoul 07336 (KR)
(72) Inventor: KANG, Min Ah, Daejeon 34122 (KR); KO, Chang Bum, Daejeon 34122 (KR); KIM, Doyun, Daejeon 34122 (KR); RYU, Dong Jo, Daejeon 34122 (KR); WOO, Jungeun, Daejeon 34122 (KR); HAN, Seon Hee, Daejeon 34122 (KR)
(74) Representative: Goddar, Heinz J.
(86) International application number: PCT/KR2023/004533
(87) International publication number: WO 2023/195743

(57) **Abstract**

Disclosed are an Insulation-layer forming composition for a lithium secondary battery and a lithium secondary battery including same, the composition including: a conjugated diene copolymer as a binder polymer; and a non-aqueous organic solvent as a dispersion solvent, the conjugate diene copolymer having a Tg of -10°C to 40°C. According to one embodiment of the present disclosure, a physical short circuit between the cathode and the anode due to the defects, such as separator shrinkage and electrode folding in the lithium secondary battery, can be prevented, and cathode coating and insulating liquid coating can be simultaneously performed, by forming, on a tap portion of the cathode, an insulating layer satisfying all of flexibility, insulating characteristics, and electrolyte resistance characteristics.

## Description

### CROSS-REFERENCE TO RELATED APPLICATION(S)

This application is based on and claims priority under 35 U.S.C. 119 to Korean Patent Application No. 10-2022-0041893, filed on April 04, 2022, in the Korean Intellectual Property Office, the disclosure of which is herein incorporated by reference in its entirety.

### BACKGROUND OF THE INVENTION

### 1. Field of the invention

The present disclosure relates to an insulation-layer forming composition for a lithium secondary battery and a lithium secondary battery including the same.

### 2. Description of the Prior Art

The technical advancement and increasing demands for mobile devices have led to rapidly increasing demands for secondary batteries for use as the energy source, and accordingly, numerous studies are under way about batteries that can meet a variety of demands.

Typically, in terms of the shape of batteries, there is a high demand for prismatic batteries or pouch-typed batteries that are thin enough to be applied to products such as mobile phones, and in terms of the material for batteries, there is a high demand for lithium secondary batteries such as lithium cobalt polymer batteries that exhibit high energy density, discharge voltage, and safety.

One of the major research tasks on such secondary batteries is to improve safety. The main causes of battery safety-related accidents are the occurrence of an abnormal high temperature state due to a short circuit between a cathode and an anode. That is, under normal circumstances, a separator is disposed between the cathode and the anode to maintain electrical insulation, but under abnormal misuse or abuse circumstances, for example, the occurrence of overcharge or over-discharge of the battery, the occurrence of an internal short circuit due to dendritic growth of electrode materials or foreign matter, the penetration of sharp objects such as nails and screws into the battery, or the excessive deformation of the battery by external force, there may be limitations in using a typical separator alone.

In general, a microporous membrane formed of a polyolefin resin is mainly used as a separator, but the heat resistance thereof is not sufficient since the heat resistance temperature thereof is about 120°C to 160°C. Therefore, the occurrence of an internal short circuit may a state of thermal runaway in which the separator shrinks due to the short circuit reaction heat to result in an enlargement in a short-circuit part and the generation of much more reaction heat. Thus, various methods for reducing the possibility of cell deformation, external impact, or a physical short circuit between the cathode and the anode have been studied.

For example, in order to prevent the occurrence of a short circuit caused by the contact of an electrode tap with an upper end of an electrode assembly, resulting from the movement of the electrode assembly in a state in which a battery is completed, there is a method of attaching a predetermined sized insulation tape on the electrode tab near the upper end of a current collector. However, the winding of such an insulation tape is very complicated, and when the insulation tape is wound from the upper end of the current collector to a length slightly extending downward, such a portion may cause an increase in the thickness of the electrode assembly. Moreover, the tape tends to be unwound when the electrode tab is bent.

In addition, there is a method in which an insulating layer is formed of a non-aqueous binder (PVDF, etc.) or an aqueous styrene-butadiene copolymer (SBL) on the tab portion of the anode. However, the non-aqueous binder (PVDF, etc.) has a lowered wet adhesion and thus fails to prevent the migration of lithium ions in an overlay region of the electrode, resulting in the exhibition of capacity. In particular, lithium ions may be precipitated when capacity is exhibited in the overlay region of the electrode, and this may cause a decrease in stability of the battery cell. In addition, when an aqueous styrene-butadiene copolymer (SBL) binder is used, the gelation of PVDF, an organic binder used as a cathode binder during simultaneous coating with a slurry for a cathode mixture layer, the penetration of the cathode slurry into the boundary of an insulating liquid, and the reduction in battery performance caused by side reactions due to moisture, so that simultaneous coating of the slurry for a cathode mixture layer and the slurry for the insulating coating layer are impossible.

Thus, there is a high need for the development of an insulating liquid capable of simultaneous coating of a slurry for a cathode mixture layer and a slurry for an insulating coating layer while satisfying all of flexibility, insulating characteristics, and electrolyte resistance characteristics.

### Prior Art Document

### Patent Document

KR 10-1586530 B1

### SUMMARY OF THE INVENTION

The present disclosure has been made in order to solve the above-mentioned problems in the prior art, and an aspect of the present disclosure is to provide an insulation-layer forming composition for a lithium secondary battery, capable of simultaneously performing cathode coating and insulating liquid coating by replacing water, which is a dispersion solvent of an aqueous conjugated diene copolymer (latex), with a non-aqueous organic solvent (e.g., N-methyl-pyrrolidone).

Another aspect of the present disclosure is to provide a method for manufacturing a cathode for a lithium secondary battery by using the above-described insulation-layer forming composition for a lithium secondary battery.

Still another aspect of the present disclosure is to provide a cathode for a lithium secondary battery, the cathode being formed of the above-described insulation-layer forming composition for a lithium secondary battery.

Still another aspect of the present disclosure is to provide a lithium secondary battery including the above-described cathode for a lithium secondary battery.

Other purposes and advantages of the present disclosure will be clarified by following detailed description and claims.

In accordance with an aspect of the present disclosure, there is provided an insulation-layer forming composition for a lithium secondary battery, the composition including: a conjugated diene copolymer as a binder polymer; and a non-aqueous organic solvent as a dispersion solvent, wherein the conjugate diene copolymer has a Tg of -10°C to 40°C.

In accordance with another aspect of the present disclosure, there is provided a method for manufacturing a cathode for a lithium secondary battery, the method including: preparing a water-dispersed conjugated diene latex; adding a non-aqueous organic solvent to the water-dispersed conjugated diene latex, followed by warming and decompression, to prepare a slurry for an insulating coating layer; applying a slurry for a cathode mixture layer on one or both surfaces of a cathode current collector, the slurry for a cathode mixture layer containing a cathode active material, a conductor, and a non-aqueous binder; applying the slurry for an insulating coating layer to cover a partial region of the slurry for a cathode mixture layer applied to the cathode current collector, from a partial region of a non-coated part of the cathode current collector; and drying the slurry for a cathode mixture layer and the slurry for an insulating coating layer applied to the cathode current collector.

In accordance with still another aspect of the present disclosure, there is provided a cathode for a lithium secondary battery, including: a cathode current collector; a cathode tap protruding from the cathode current collector; and an insulating layer coated on the cathode tap and formed of an insulating material, wherein the insulating material contains the composition according to the present disclosure.

In accordance with still another aspect of the present disclosure, there is provided a lithium secondary battery including the cathode for a lithium secondary battery.

According to one embodiment of the present disclosure, a physical short circuit between the cathode and the anode due to the defects, such as separator shrinkage and electrode folding in the lithium secondary battery, can be prevented by forming, on a tap portion of the cathode, an insulating layer satisfying all of flexibility, insulating characteristics, and electrolyte resistance characteristics.

According to one embodiment of the present disclosure, cathode coating and insulating liquid coating can be simultaneously performed by providing a slurry for an insulating coating layer in which water as a dispersion solvent of conjugated diene latex particles is replaced with a non-aqueous organic solvent (e.g., N-methyl-pyrrolidone).

The advantageous effects according to the present disclosure are not limited by the contents exemplified above, and various advantageous effects are included herein.

### BRIEF DESCRIPTION OF THE DRAWINGS

The above and other aspects, features and advantages of the present disclosure will be more apparent from the following detailed description taken in conjunction with the accompanying drawings.
FIG. 1 shows brittleness evaluation results according to Experimental Example 4.
FIG. 2 shows moisture influence evaluation results according to Experimental Example 7.

### DETAILED DESCRIPTION OF THE EXEMPLARY EMBODIMENTS

Hereinafter, the present disclosure will be described in detail.

All terms (including technical and scientific terms) used in this specification, unless otherwise defined, may be used in the meaning commonly understood by those of ordinary skill in the art to which the present invention pertains. In addition, terms defined in a commonly used dictionary are not to be interpreted ideally or excessively unless clearly defined in particular.

Throughout the specification, when a part "includes" or "comprises" an element, such an expression is to be understood as open-ended terms having the possibility of further including another element but not excluding another element, unless otherwise stated.

As used herein, "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, the term "insulating coating layer" refers to an insulating member formed by applying and drying from at least a portion of a non-coated part of a current collector to at least a portion of an electrode mixture layer.

As used herein, the term "wet adhesion" refers to the adhesion of the insulating coating layer as measured in a state of being impregnated with an electrolyte. When the insulating coating layer is swollen or released in a state of being impregnated with an electrolyte to lower its wet adhesion, the insulating coating layer cannot maintain the insulating characteristics of electrodes, which can be checked by coating the insulating coating layer on an electrode specimen to measure the insulating characteristics.

As used herein, "metal specimen" refers to a space where an insulating coating layer is formed, and means a metal current collector that is used in the manufacturing of an electrode, and may be a metal current collector that is punched to have a predetermined width and a predetermined length. For example, the metal specimen may be aluminum, copper, or an aluminum alloy.

### <Insulation-layer forming composition for lithium secondary battery>

An aspect of the present disclosure is an insulation-layer forming composition for a lithium secondary battery, the composition containing: a conjugated diene copolymer as a binder polymer; and a non-aqueous organic solvent as a dispersion solvent, wherein the conjugate diene copolymer has a Tg of -10°C to 40°C.

In the insulation-layer forming composition for a lithium secondary battery according to the present disclosure, conjugated diene copolymer particles having an average particle diameter of 50 nm to 500 nm are present in an independent phase, and the conjugated diene copolymer may be contained in a content of 20 wt% to 100 wt% based on the total solid mass of the composition. When the content of the conjugated diene copolymer is 20 wt% to 100 wt%, the conjugated diene copolymer particles may exhibit an insulating effect and maintain adhesive performance even in an electrolyte, thereby imparting a predetermined insulating effect.

The insulation-layer forming composition may further contain inorganic particles or dyes within a range that does not impair insulating characteristics.

In one embodiment of the present disclosure, the inorganic particles may be alumina, boehmite, silica, titanium dioxide, or the like.

The conjugated diene copolymer may include a polymerized product of one or more monomers selected from the group consisting of: (a) a conjugated diene-based monomer or a conjugated diene-based polymer; (b) one or more monomers selected from the group consisting of acrylate-based monomers, vinyl-based monomers, and nitrile-based monomers; and (c) unsaturated carboxylic acid-based monomers and hydroxy group-containing monomers.

The conjugated diene-based monomer may be one monomer selected from the group consisting of 1,3-butadiene, isoprene, chloroprene, and piperylene.

The conjugated diene-based polymer may be, for example, a polymer of two or more monomers selected from the group consisting of 1,3-butadiene, isoprene, chloroprene, and piperylene, a styrene-butadiene copolymer, an acrylonitrile-butadiene copolymer, a styrene-isoprene copolymer, an acrylate-butadiene rubber, an acrylonitrile-butadiene-styrene rubber, an ethylene-propylene-diene polymer, or a partially epoxidized or brominated polymer of the foregoing polymers, or mixtures thereof.

The acrylate-based monomer may be at least one monomer selected from the group consisting of methylethacrylate, methylmethacrylate, methacryloxy ethylethyleneurea, β-carboxy ethyl acrylate, aliphatic monoacrylate, dipropylene diacrylate, ditrimethylolpropane tetraacrylate, dipentaerythriol hexaacrylate, pentaerythriol triacrylate, pentaerythriol tetraacrylate, and glycidyl methacrylate.

The vinyl-based monomer may be at least one monomer selected from the group consisting of styrene, α-methylstyrene, β-methylstyrene, p-t-butylstyrene, and divinyl benzene.

The nitrile-based monomer may be at least one monomer selected from the group consisting of acrylonitrile, methacrylonitrile, and allyl cyanide.

The unsaturated carboxylic acid-based monomer may be at least one monomer selected from the group consisting of maleic acid, fumaric acid, methacrylic acid, acrylic acid, glutaric acid, itaconic acid, tetrahydrophthalic acid, corotonic acid, isocrotonic acid, and nadic acid, but is not limited thereto.

The hydroxy group-containing monomer may be at least one monomer selected from the group consisting of hydroxy acrylate, hydroxyethyl acrylate, hydroxybutyl acrylate, hydroxypropyl acrylate, hydroxyethyl methacrylate, hydroxypropyl methacrylate, and hydroxybutyl methacrylate, but is not limited thereto.

A method for manufacturing conjugated diene copolymer particles is not particularly limited, and the conjugated diene copolymer particles may be manufactured by a known suspension polymerization method, emulsion polymerization method, seed polymerization method, or the like. A monomer mixture for manufacturing the copolymer particles may contain one or more of other ingredients, such as a polymerization initiator, a crosslinking agent, a coupling agent, a buffer, a molecular weight modifier, and an emulsifier. Specifically, the copolymer particles may be manufactured by an emulsion polymerization method, and in such a case, the average particle diameter of the copolymer particles may be adjusted by the amount of the emulsifier, and in general, as the amount of the emulsifier increases, the particle size tends to decrease, and as the amount of the emulsifier decreases, the particle size tends to increase. A desired average particle diameter can be realized by adjusting the amount of the emulsifier considering the desired particle size, reaction time, reaction stability, and the like. The polymerization temperature and polymerization time may be appropriately determined depending on the polymerization method, the type of polymerization initiator, or the like, and for example, the polymerization temperature may be 10°C to 150°C and the polymerization time may be 1 to 20 hours.

The polymerization initiator may be an inorganic or organic peroxide, and for example, water-soluble initiators including potassium persulfate, sodium persulfate, and ammonium persulfate and oil-soluble initiators including cumene hydroperoxide and benzoyl peroxide may be used. In addition, the monomer mixture may further contain an activator to promote the initiation reaction of a peroxide together with the polymerization initiator, and the activator may be at least one selected from the group consisting of sodium formaldehyde sulfoxylate, sodium ethylenediamine tetraacetate, ferrous sulfate, and dextrose.

The crosslinking agent is a material that promotes crosslinking of the binder, and examples thereof may include: amines, such as diethylene triamine, triethylene tetramine, diethylamino propylamine, xylene diamine, and isophorone diamine; acid anhydrides, such as dodecyl succinic anhydride and phthalic anhydride; polyamide resins, polysulfide resins, phenolic resins, ethylene glycol dimethacrylate, diethylene glycol dimethacrylate, triethylene glycol dimethacrylate, 1,3-butanediol dimethacrylate, 1,6-hexanediol dimethacrylate, neopentyl glycol dimethacrylate, trimethylol propane trimethacrylate, trimethylol methane triacrylate, glycidyl methacrylate, and the like, and examples of the grafting agent may include aryl methacrylate (AMA), triaryl isocyanurate (TAIC), triaryl amine (TAA), diaryl amine (DAA), and the like.

The coupling agent is a material for increasing the adhesion between the active material and the binder and is characterized by having two or more functional groups, and any material that has one functional group reacting with a hydroxyl group or carboxy group on the surface of a silicon, tin, or graphite active material to form a chemical bond and the other functional group reacting with a nanocomposite according to the present disclosure to form a compound bond is not particularly limited. Examples of the coupling agent may include triethoxysilylpropyl tetrasulfide, mercaptopropyl triethoxysilane, aminopropyl triethoxysilane, chloropropyl triethoxysilane, vinyltriethoxysilane, methacryloxytpropyl triethoxysilane, methacryloxypropyl triethoxysilane, glycidoxypropyl triethoxysilane, isocyanatopropyl triethoxysilane, cyanatopropyl triethoxysilane, and the like.

The buffer may be, for example, one selected from the group consisting of NaHCO₃, Na₂CO₃, K₂HPO₄, KH₂PO₄, Na₂HPO₄, NaOH, and NH₄OH.

Examples of the molecular weight modifier may include mercaptans, terpenes such as terbinolene, dipentene, and t-terpene, halogenated hydrocarbons such as chloroform and carbon tetrachloride, and the like.

The emulsifier is a material having both a hydrophilic group and a hydrophobic group. In one specific embodiment, the emulsifier may be at least one selected from the group consisting of anionic emulsifiers and nonionic emulsifiers.

The use of a nonionic emulsifier together with an anionic emulsifier helps control the particle size and distribution and contributes to the electrostatic stabilization of the ionic emulsifier, thereby providing additional stabilization of a colloidal form through van der Waals forces of polymer particles. The nonionic emulsifier is rarely used alone since the nonionic emulsifier produces less stable particles than the anionic emulsifier.

The anionic emulsifier may be selected from the group consisting of phosphates, carboxylates, sulfates, succinates, sulfosuccinate-based, sulfonates, and disulfonates. For example, the anionic emulsifier may be selected from the group consisting of sodium alkyl sulfate, sodium polyoxyethylene sulfate, sodium lauryl ether sulfate, sodium polyoxyethylene lauryl ether sulfate, sodium lauryl sulfate, sodium alkyl sulfonate , sodium alkyl ether sulfonate, sodium alkylbenzene sulfonate, sodium linear alkylbenzene sulfonate, sodium alpha-olefin sulfonate, sodium alcohol polyoxyethylene ether sulfonate, sodium dioctyl sulfosuccinate, sodium perfluorooctanesulfonate, sodium perfluorobutanesulfonate, alkyl diphenyloxide disulfonates, sodium dioctyl sulfosuccinate (DOSS), sodium alkyl-aryl phosphate, sodium alkyl ether phosphate, and sodium lauroyl sarcosinate. However, the anionic emulsifier is not limited thereto, and known anionic emulsifiers may be included in the contents of the present disclosure.

The nonionic emulsifier may be an ester type, an ether type, or an ester ether type. Examples of the nonionic emulsifier may include polyoxyethylene glycol, polyoxyethylene glycol methyl ether, polyoxyethylene monoallyl ether, polyoxyethylene bisphenol-A ether, polypropylene glycol, polyoxyethylene alkenyl ether, and the like. However, the nonionic emulsifier is not limited thereto, and all known nonionic emulsifiers may be included in the contents of the present disclosure.

The conjugated diene copolymer may contain a polymerized product of, based on the total weight thereof, 20 to 45 wt% of the conjugated diene-based monomer or conjugated diene-based polymer (a), 50 to 70 wt% of the one or more monomers selected from the group consisting of acrylate-based monomers, vinyl-based monomers, and nitrile-based monomers (b), and 1 to 20 wt% of the one or more monomers selected from the group consisting of unsaturated carboxylic acid-based monomers and hydroxy group-containing monomers (c). Other ingredients, such as the emulsifier, the buffer, and the crosslinking agent, may be optionally contained within the range of 0.1 to 10 wt%.

When the content ratio among the respective monomers constituting the conjugated diene copolymer falls within the above range, the Tg may be -10°C to 40°C.

When the content ratio among the respective monomers constituting the conjugated diene copolymer falls within the above range, the flexibility, insulating characteristics, electrolyte resistance characteristics of the insulation-layer can be significantly improved.

In the experimental example of the present disclosure, when the content ratio among the respective monomers constituting the conjugated diene copolymer falls within the above range, all the initial tackiness, brittleness, and insulating characteristics were excellent (see Table 2).

Meanwhile, the average particle diameter of the copolymer may be 50 nm to 500 nm. An average particle diameter of less than 50 nm to 500 nm or more may result in a deterioration in dispersion stability, and thus such an average particle diameter is not preferable.

Meanwhile, in the composition according to the present disclosure, the copolymer particles show an effect of enhancing adhesion when the copolymer particles are present in independent phase, and thus, it is very important to prevent the agglomeration between particles. Therefore, the composition of the present disclosure contains a dispersion solvent for dispersing the copolymer particles. In the present disclosure, a non-aqueous organic solvent is used as a dispersion solvent.

The non-aqueous organic solvent may be at least one selected from the group consisting of N-methyl-pyrrolidone (NMP), dimethylformamide (DMF), dimethylacetamide (DMAc), dimethyl sulfoxide (DMSO), ethylene carbonate (EC), diethyl carbonate (DEC), ethyl methyl carbonate (EMC ), dimethyl carbonate (DMC), propylene carbonate (PC), dipropyl carbonate (DPC), butylene carbonate (BC), methylpropyl carbonate (MPC), ethylpropyl carbonate (EPC), acetonitrile, dimethoxyethane, tetrahydrofuran (THF), γ-butyrolactone, methyl alcohol, ethyl alcohol, and isopropyl alcohol.

Preferably, N-methyl-pyrrolidone (NMP) may be used as the non-aqueous organic solvent, but is not limited thereto

The moisture content of the insulation-layer forming composition for a lithium secondary battery according to an embodiment of the present disclosure may be 10,000 ppm or less, preferably 5,000 ppm or less, and still more preferably 3,000 ppm or less, and in the above range, the insulation-layer forming composition may be coated separately from the electrode mixture layer and the properties of the electrodes do not deteriorate.

### <Method for manufacturing cathode for lithium secondary battery>

Another aspect of the present disclosure is directed to a method for manufacturing a cathode for a lithium secondary battery, the method including: preparing a water-dispersed conjugated diene latex; adding a non-aqueous organic solvent to the water-dispersed conjugated diene latex, followed by warming and depressurizing, to prepare a slurry for an insulating coating layer; applying a slurry for a cathode mixture layer on one or both surfaces of a cathode current collector, the slurry containing a cathode active material, a conductor, and a non-aqueous binder; applying the slurry for an insulating coating layer to cover a partial region of the slurry for a cathode mixture layer applied to the cathode current collector from a partial region of a non-coated part of the cathode current collector; and drying the slurry for a cathode mixture layer and the slurry for an insulating coating layer applied to the cathode current collector.

The preparing of the slurry for an insulating coating layer may include replacing water, which is a dispersion solvent of conjugated diene latex particles, with a non-aqueous organic solvent.

In an embodiment of the present disclosure, the preparing of the slurry for an insulating coating layer may be performed by adding a non-aqueous organic solvent to the water-dispersed conjugated diene latex, followed by warming to a temperature of 40°C to 100°C and decompression at less than 200 Torr for 1 to 20 hours.

In an embodiment of the present disclosure, the conjugated diene latex may be styrene-butadiene latex particles and the non-aqueous organic solvent may be N-methyl-pyrrolidone (NMP).

The non-aqueous organic solvent is added to the water-dispersed conjugated diene latex, followed by warming and decompression, thereby replacing water, which is a dispersion solvent of the conjugated diene latex particles, with a non-aqueous organic solvent.

In a preferable embodiment, the aqueous styrene-butadiene latex (SBL) is mixed with N-methyl-pyrrolidone (NMP), followed by temperature raising to a setting temperature of 40°C to 100°C and then decompression to less than 200 Torr, thereby replacing an aqueous styrene-butadiene latex (SBL) solvent with N-methyl-pyrrolidone (NMP).

The conjugate diene latex particles, in which water as a dispersion solvent is replaced with a non-aqueous organic solvent, maintains a particle shape thereof even after the replacement with the non-aqueous organic solvent. Whether or not the particle shape is maintained can be checked by particle size measurement. The particle size can be checked by a DLS particle size analyzer, a laser diffraction particle size analyzer, or an electron transmission microscope, but is not limited thereto.

In the cathode for a lithium secondary battery according to the present disclosure, the cathode current collector may be one that has high conductivity without causing chemical changes in the battery. For example, stainless steel, aluminum, nickel, titanium, calcined carbon, or the like may be used, and aluminum or stainless steel may be used by surface treatment with carbon, nickel, titanium, silver, or the like. For example, the current collector may be aluminum.

In addition, in the slurry for a cathode mixture layer, any cathode active material that is commonly used in a cathode can be used, and examples thereof may include lithium manganese oxide, lithium cobalt oxide, lithium nickel oxide, lithium iron oxide, or lithium composite oxides resulting from combinations thereof, but are not limited thereto.

The non-aqueous binder contained in the slurry for a cathode active material may include at least one resin selected from the group consisting of polyvinylidene fluoride-hexafluoropropylene copolymer (PVDF-co-HFP), polyvinylidene fluoride, polyacrylonitrile, polymethyl methacrylate, and copolymers thereof. As one example, the binder may include polyvinylidene fluoride.

The conductive material may be used to improve performance, such as electrical conductivity, of the cathode, and at least one selected from the group consisting of natural graphite, artificial graphite, carbon black, acetylene black, Ketjen black, and carbon fibers may be used. For example, the conductive material may include acetylene black.

Furthermore, the solvent used in the slurry for a cathode mixture layer is a non-aqueous organic solvent, and may be at least one selected from the group consisting of N-methyl-pyrrolidone (NMP), dimethylformamide (DMF), dimethylacetamide (DMAc), dimethyl sulfoxide (DMSO), ethylene carbonate (EC), diethyl carbonate (DEC), ethyl methyl carbonate (EMC ), dimethyl carbonate (DMC), propylene carbonate (PC), dipropyl carbonate (DPC), butylene carbonate (BC), methylpropyl carbonate (MPC), ethylpropyl carbonate (EPC), acetonitrile, dimethoxyethane, tetrahydrofuran (THF), γ-butyrolactone, methyl alcohol, ethyl alcohol, and isopropyl alcohol, and for example, the solvent may be N-methyl-2-pyrrolidone (NMP).

In the applying of the slurry for an insulating coating layer to the current collector, the slurry for an insulating coating layer may be applied while the slurry for a cathode mixture layer is in a non-dried state, or the slurry for a cathode mixture layer and the slurry for an insulating layer may be applied simultaneously.

In the drying of the slurry for a cathode mixture layer and the slurry for an insulating coating layer, the solvent may be removed by completely drying the slurry for a cathode mixture layer and the slurry for an insulating coating layer by a drying method that is commonly known in the art. In a specific embodiment, drying may be applied by changing a hot air method, a direct heating method, an induction heating method, or the like, at a temperature at which all solvents volatilize, but is not limited thereto. For example, the drying of the insulating coating liquid may be performed in a hot air method.

In such a case, the drying temperature may be in the temperature range of 50°C to 300°C, 60 to 200°C, or 70 to 150°C. When the drying temperature of the insulating coating liquid is lower than 50°C, the insulating coating liquid is difficult to completely dry due to a too low temperature, and when the drying temperature is higher than 300°C, the deformation of an electrode may occur due to a too high drying temperature.

The cathode mixture layer and the insulating coating layer are formed on the current collector, and the current collector is rolled, thereby manufacturing a cathode for a lithium secondary battery.

### <Cathode for lithium secondary battery>

Another aspect of the present disclosure is directed to a cathode for a lithium secondary battery, comprising: a cathode current collector; a cathode tap protruding from the cathode current collector; and an insulating layer coated on the cathode tap and formed of an insulating material, wherein the insulating material contains the composition according to the present disclosure.

According to one embodiment of the present disclosure, the cathode including the insulating layer on the cathode tab can greatly shorten the manufacturing process of the battery, ultimately reducing the manufacturing cost of the battery, and forming an insulating area more widely to make the safety of the battery can be further improved. Furthermore, the problem that may occur in the using of a conventional insulating film or tape, that is, the possibility of release is very low when the cathode tab for attachment to a corresponding region is bent, and an increase in the thickness of the electrode assembly is not caused. Furthermore, one embodiment of the present disclosure can solve a problem with respect to a deterioration in wet adhesion when a non-aqueous binder (PVDF, etc.) is used and a problem in that a slurry for a cathode mixture layer and a slurry for an insulating coating layer cannot be simultaneously coated due to the gelation of PVDF, which is an organic-based binder used as a cathode binder in the process of simultaneous coating with the slurry for a cathode mixture layer, when an aqueous styrene-butadiene copolymer (SBL) binder is used.

### <Lithium secondary battery>

Still another aspect of the present disclosure is directed to a lithium secondary battery including a cathode for a lithium secondary battery.

In general, the lithium secondary battery further includes a separator and a lithium salt-containing non-aqueous electrolyte, in addition to the electrodes.

The separator is interposed between an anode and a cathode, and an insulating thin film having high ion permeability and mechanical strength is used therefor. The separator generally has a pore diameter of 0.01 to 10 gm and a thickness of 5 to 300 gm. As such a separator, for example, sheets or non-woven fabrics formed of chemical-resistant and hydrophobic olefin-based polymers such as polypropylene, glass fibers, or polyethylene are used. When a solid electrolyte, such as a polymer, is used as an electrolyte, the solid electrolyte may serve as a separator.

The lithium-containing non-aqueous electrolyte is composed of a non-aqueous electrolyte and a lithium salt.

Examples of the non-aqueous electrolyte may include aprotic organic solvents, such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydroxy franc, 2-methyl tetrahydrofuran, dimethylsulfoxide, 1,3-dioxorane, formamide, dimethylformamide, dioxorane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ethers, methyl propionates, and ethyl propionates.

The lithium salt is a substance that is well dissolved in the non-aqueous electrolyte, and examples thereof may include LiCl, LiBr, LiI, LiClO₄, LiBF₄, LiB₁₀Cl₁₀, LiPF₆, LiCF₃SO₃, LiCF₃CO₂, LiAsF6, LiSbF₆, LiAlCl₄, CH₃SO₃Li, (CF₃SO₂)₂NLi, chloroborane lithium, lower aliphatic carboxylic acid lithium, lithium tetraphenylborate, and imides.

In some cases, an organic solid electrolyte, an inorganic solid electrolyte, and the like may be used.

Examples of the organic solid electrolyte may include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, polymers containing ionic dissociation groups, and the like.

Examples of the inorganic solid electrolyte may include nitrides, halides, and sulfates of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

In order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, and aluminum trichloride may be added to the non-aqueous electrolyte In some cases, in order to impart incombustibility, the electrolyte may further contain halogen-containing solvents, such as carbon tetrachloride and ethylene trifluoride, and in order to enhance high-temperature storage characteristics, the electrolyte may further contain carbon dioxide gas, fluoro-ethylene carbonate (FEC), propene sultone (PRS), and the like.

The secondary battery according to the present disclosure may be used in battery cells that are used as power sources in small devices, preferably as unit cells of medium or large battery modules including a plurality of battery cells used as power sources of medium or large devices.

Preferable examples of the medium or large devices may include, but are not limited to, electric motor-driven power tools; electric cars including electric vehicles (EVs), hybrid electric vehicles (HEVs), and plug-in hybrid electric vehicles (PHEVs); electric two-wheeled vehicles including E-bikes and E-scooters; electric golf carts; and systems for storing power.

Hereinafter, the present disclosure will be described in detail with reference to examples. However, the following examples are merely for illustrating the present disclosure and are not intended to limit the scope of the present disclosure.

### [Example 1]

After 5 parts by weight of styrene-butadiene seed latex having a particle size of 55 nm was added into a reactor, the temperature was raised to 80°C, and then 38 g of 1,3-butadiene, 59 g of styrene, and 3 g of acrylic acid as monomers, 0.5 g of NaHCO₃ as a buffer, 1 g of alkyldiphenyloxide disulfonate as an emulsifier, 1 g of dodecyl mercaptan as a molecular weight modifier, and 1 g of potassium persulfate as a polymerization initiator were added into the reactor for 4 hours, followed by reaction for an additional 4 hours while maintaining 80 °C, thereby preparing 50% solids styrene-butadiene copolymer latex. In such a case, the pH was adjusted to neutral (7) by using sodium hydroxide. As a result of analyzing the size of copolymer particles by using Submicron particle sizer (Nicomp TM 380) after polymerization, the average particle diameter of the polymerized copolymer particles was 150 nm.

After 100 g of the prepared styrene-butadiene copolymer latex was added into a reactor, 600 g of N-methyl-pyrrolidone (NMP) was added and mixed, and then the temperature was raised to 90°C, and thereafter, the pressure was reduced to 15 Torr for 1 to 4 hours, thereby replacing water, which is a dispensing solvent of styrene-butadiene copolymer particles, with NMP to prepare a composition containing a styrene-butadiene copolymer dispersed in NMP. Especially, the final moisture content was 10,000 ppm or less, and NMP was additionally corrected to make the final solid content 8%. The moisture content of the final product was measured by a Karl Fischer moisture meter.

### [Example 2]

A composition containing a styrene-butadiene copolymer dispersed in NMP was prepared by the same method as in Example 1 except that 30 g of 1,3-butadiene, 60 g of styrene, 5 g of methylmethacrylate, 2 g of acrylonitrile, 1 g of hydroxyacrylate, and 3 g of itaconic acid as monomers were used.

### [Example 3]

A composition containing a styrene-butadiene copolymer dispersed in NMP was prepared by the same method as in Example 1 except that 45 g of 1,3-butadiene, 50 g of styrene, and 5 g of acrylic acid as monomers and 0.2 g dodecyl mercaptan as a molecular weight modifier were used.

### [Example 4]

A composition containing a styrene-butadiene copolymer dispersed in NMP was prepared by the same method as in Example 1 except that 22 g of 1,3-butadiene, 68 g of styrene, 5 g of methylmethacrylate, 2 g of hydroxyacrylate, and 3 g of itaconic acid as monomers were used.

### [Comparative Example 1]

A composition containing a styrene-butadiene copolymer dispersed in NMP was prepared by the same method as in Example 1 except that 48 g of 1,3-butadiene, 47 g of styrene, 1 g of methylmethacrylate, 2 g of hydroxyacrylate, and 2 g of acylic acid as monomers were used.

### [Comparative Example 2]

A composition containing a styrene-butadiene copolymer dispersed in NMP was prepared by the same method as in Example 1 except that 20 g of 1,3-butadiene, 75 g of styrene, 2 g of methylmethacrylate, and 3 g of acrylic acid as monomers were used.

### [Comparative Example 3]

A styrene-butadiene copolymer latex having a solid content of 50% was prepared by the same method as in Example 2.

After 100 g of the prepared styrene-butadiene copolymer latex was added into a reactor, 530 g of N-methyl-pyrrolidone (NMP) was added and mixed, and then the temperature was raised to 85°C, and thereafter, the pressure was reduced to 180 Torr for 1 hour, thereby replacing water, which is a dispensing solvent of styrene-butadiene copolymer particles, with NMP to prepare a composition containing a styrene-butadiene copolymer dispersed in NMP. NMP was added to make the final solid content 8%, and especially, the final moisture content was 50,010 ppm. The moisture content of the final product was measured by a Karl Fischer moisture meter.

### [Comparative Example 4]

A styrene-butadiene copolymer latex having a solid content of 50% was prepared by the same method as in Example 2.

After 100 g of the prepared styrene-butadiene copolymer latex was added into a reactor, 530 g of N-methyl-pyrrolidone (NMP) was added and mixed, and then the temperature was raised to 90°C, and thereafter, the pressure was reduced to 100 Torr for 7 hours, thereby replacing water, which is a dispensing solvent of styrene-butadiene copolymer particles, with NMP to prepare a composition containing a styrene-butadiene copolymer dispersed in NMP. Especially, NMP was added to make the final solid content 8%, and the final moisture content was 12,201 ppm. The moisture content of the final product was measured by a Karl Fischer moisture meter.

### [Comparative Example 5] Preparation of composition containing styrene-butadiene latex without dispersion solvent replacement

For comparison with a composition containing a styrene-butadiene latex without dispersion solvent replacement, a composition was prepared by mixing the styrene-butadiene latex prepared in Example 4 in a state in which solvent replacement was not separately conducted, and carboxymethyl cellulose at a weight ratio of 9:1. Carboxymethyl cellulose is a thickening agent and is used to improve coating properties of the styrene-butadiene latex without separate dispersion solvent replacement.

Table 1 below summarizes the types and amounts of monomers used in Examples 1 to 4 and Comparative Examples 1 to 5. The amount used is expressed in wt% based on the total weight of the monomers.

**TABLE 1**

| | Butadiene (g) | Styrene (g) | Methyl methacrylate (g) | Acrylonitrile (g) | Hydroxy acrylate (g) | Acrylic acid (g) | Itaconic acid (g) |
|---|---|---|---|---|---|---|---|
| Example 1 | 38 | 59 | - | - | - | 3 | - |
| Example 2 | 30 | 60 | 5 | 2 | 1 | - | 3 |
| Example 3 | 45 | 50 | - | - | - | 5 | - |
| Example 4 | 22 | 68 | 5 | - | 2 | - | 3 |
| Comparative Example 1 | 48 | 47 | 1 | - | 2 | 2 | - |
| Comparative Example 2 | 20 | 75 | 2 | - | - | 3 | - |
| Comparative Example 3 | 30 | 60 | 5 | 2 | 1 | - | 3 |
| Comparative Example 4 | 30 | 60 | 5 | 2 | 1 | - | 3 |
| Comparative Example 5 | 22 | 68 | 5 | - | 2 | - | 3 |

The compositions containing the styrene-butadiene copolymer dispersed in NMP, prepared in Examples 1 to 4 and Comparative Examples 1 to 5, were measured for water content, viscosity, Tg evaluation according to the methods described in Experimental Examples 1, 2 and 5 below. The results are shown in Table 2 below.

In order to confirm excellent properties of the compositions containing the styrene-butadiene copolymer dispersed in NMP prepared in Examples 1 to 4, the compositions containing the styrene-butadiene copolymer dispersed in NMP prepared in Comparative Examples 1 and 2, the composition containing PVDF (Comparative Example 6), the composition containing hydrogenated nitrile rubber dissolved in NMP (Comparative Example 7), and the composition containing styrene-butadiene-based rubber dissolved in NMP (Comparative Example 8) were evaluated for initial tackiness and brittleness according to the methods sown in Experimental Examples 3 and 4. The results are shown in Table 2 below. In Comparative Example 8, the styrene-butadiene-based rubber was not completely but partially dissolved in NMP, and gelation occurred at a solid content of 8%. In the following experimental examples, the gelated portion was removed, and only the dissolved portion was obtained and experimented, and the experimental results are shown.

The compositions containing the styrene-butadiene copolymer dispersed in NMP, prepared in Examples 1 to 4 and Comparative Examples 1 to 2 and the composition containing PVDF (Comparative Example 6) were evaluated for insulating characteristics and moisture effects according to the methods described in Experimental Examples 6 and 7 below. The results are shown in Table 2 below. The compositions prepared in Comparative Examples 3 to 4 had the same composition as in Example 2 except for the moisture content, and thus only the effects of moisture influenced by the moisture content was evaluated. For comparison of characteristics between a state in which the dispersion solvent of styrene-butadiene latex was not replaced with a non-aqueous organic solvent and a state in which it was replaced, the composition containing the styrene-butadiene latex without dispersion solvent replacement, prepared in Comparative Example 8, were evaluated for brittleness and moisture effects.

### [Experimental Example 1] Moisture content

The compositions prepared in Examples 1 to 4 and Comparative Examples 1 to 8 were measured for moisture content by using a Metrohm 899 Coulometer connected with an 860 KF Thermoprep (oven) while 0.1 to 0.4 g of each sample was weighed and the temperature of the oven was adjusted to 220°C. Comparative Example 5 is a product prepared in an aqueous phase without dispersion solvent replacement, and the moisture content was unmeasurable by a device due to a large moisture content thereof, and thus the solid content was measured and the remaining content was calculated and displayed as a moisture content.

### [Experimental Example 2] Tg measurement

With respect to the compositions prepared in Examples 1 to 4 and Comparative Examples 1 to 8, DSC was used to perform 2 cycles from -80°C to 80°C at 5°C/min, and then in the second cycle, the glass transition temperature was calculated from the median value of the transition section. TA Instruments' DSC 25 was used, and 3 to 20 mg of a sample was weighed to measure Tg. The results are shown in Table 2 below.

### [Experimental Example 3] Initial tackiness evaluation

Each of the compositions prepared in Examples 1 to 4, Comparative Examples 1 to 2, and Comparative Examples 5 to 8 was coated on aluminum metal foil and dried at 130°C to prepare a metal sample with an insulating coating layer having a thickness of about 10 pm. The metal sample was cut into 2 cm × 12 cm in size, laminated on a SUS plate, and then subjected to 90° tackiness measurement. The results are shown in Table 2 below.

### [Experimental Example 4] Brittleness measurement

Each of the compositions prepared in Examples 1 to 4, Comparative Examples 1 to 2, and Comparative Examples 5 to 8 was coated on a substrate to a final thickness of 20 µm, dried at 130°C, cut into 2 cm width, and then subjected to brittleness measurement. After the sample was folded in half at room temperature, the sample was pressed once with 1 kg roller and then unfolded, and then visually checked whether or not a coating film was cracked or broken. The results are shown in Table 2 below.

### [Experimental Example 5] Viscosity measurement

Each of the compositions prepared in Examples 1 to 4 and Comparative Examples 1 to 8 was measured for viscosity. For the viscosity measurement, the No. 63 spindle of Brookfield's LV type viscometer was turned at 12 rpm at a temperature of 25°C and after 1 minute, the viscosity was measured. If the viscosity was out of the measurement range, the rpm value was lowered and measured. The results are shown in Table 2 below. In Table 2, 8% viscosity means a solid content of 8%.

### [Experimental Example 6] Insulating characteristics measurement

A slurry for a cathode mixture layer was prepared by weighing 96 parts by weight of LiNi_{0.8}Co_{0.2}Mn_{0.2}O₂ as a cathode active material, 2 parts by weight of PVDF as a binder, and 2 parts by weight of carbon black as a conducting agent and mixing the same in an N-methyl pyrrolidone (NMP) solvent. The slurry for a mixture layer was applied to aluminum foil, dried, and then rolled to prepare a cathode having a cathode mixture layer with a thickness of 60 um.

Thereafter, insulating liquids, which are the compositions containing a styrene-butadiene copolymer prepared in Examples 1 to 4, an insulating liquids, which are compositions containing styrene-butadiene copolymers prepared in Comparative Examples 1 and 2, and an insulating liquid having PVDF (Comparative Example 6) were applied onto a cathode mixture layer, followed by drying, thereby forming a cathode insulating layer with a thickness of 10 gm.

A coin-type half-cell was manufactured by using the cathode, lithium foil as an anode, and an electrolyte containing 1 M LiPF₄ in a solvent of EC:ECM = 3:7. The coin-type half-cell was storage in an oven at 60°C for 15 days, and then the discharge capacity of the half-cell was measured to investigate the insulating effect of an insulating layer. For comparison, a half-cell having a cathode without an insulating coating layer was manufactured, and the discharge capacity ratios of cathodes with insulating coating layers of the insulating liquids of Examples 1 to 4 and Comparative Examples 1, 2, and 6 were calculated while 0.1 C discharge capacity was set to 100. The results are shown in Table 2 below.

**TABLE 2**

| | Tg (°C) | Initial Tackiness (gf/cm) | Brittleness | Moisture content (ppm) | 8% viscosity (cP) | High-temperature 0.1 C discharge capacity ratio (%) | Permeation or not into overlay portion | |
|---|---|---|---|---|---|---|---|---|
| | | | | | | | Immediately after application | 1 min after application |
| Example 1 | 0 | 33 | No crack | 1805 | 3805 | 0.7 | No permeation | No permeation |
| Example 2 | 28 | 7 | No crack | 2802 | 7104 | 0.4 | No permeation | No permeation |
| Example 3 | -9 | 52 | No crack | 9504 | 820 | 0.5 | No permeation | No permeation |
| Example 4 | 37 | 3 | No crack | 340 | 8123 | 0.4 | No permeation | No permeation |
| Comparative Example 1 | -15 | 388 | No crack | 1104 | 7215 | 1.2 | - | - |
| Comparative Example 2 | 43 | 3 | Crack | 1631 | 3200 | 1.5 | - | - |
| Comparative Example 3 | 28 | - | - | 50010 | 122 | - | Permeation | Permeation |
| Comparative Example 4 | 28 | - | - | 12201 | 1605 | - | No permeation | Permeation |
| Comparative Example 5 | 37 | - | Crack | 919000 | 2649 | - | Permeation | Permeation |
| Comparative Example 6 | -35 | 5 | No crack | 1252 | 1800 | 8.5 | - | - |
| Comparative Example 7 | -31 | 624 | No crack | 1540 | 782 | - | - | - |
| Comparative Example 8 | -50 | 1088 | No crack | 2803 | Gel formation | - | - | - |

As shown in Table 2 above, Examples 1 to 4 showed excellent initial tackiness, brittleness, and insulating characteristics.

However, Comparative Examples 1, 7, and 8 having a Tg of lower than -10°C had high initial tackiness, resulting in electrodes sticking to each other after coating, and thus, a winding process is difficult to perform due to the electrodes sticking each other.

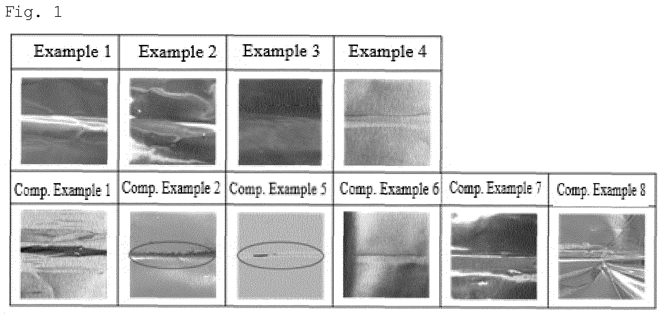

In addition, as shown in FIG. 1, Comparative Example 2 having a Tg of higher than 40°C had low initial tackiness but showed cracking. Comparative Example 5 also showed cracking, which was because the addition of even a small amount of carboxymethyl cellulose as a thickening agent resulted in high brittleness, influencing an insulating liquid. For the same reason, an insulating layer may be cracked or released in a winding and slitting process even the styrene-butadiene latex was separately coated instead of simultaneous coating.

Comparative Example 6 using PVDF had low initial tackiness, but showed a high-temperature discharge capacity ratio.

Especially, the cathodes formed of insulating coating layers of the insulating liquids of Comparative Examples 1, 2, and 6 to 8 showed higher discharge rates compared with the cathodes formed of insulating coating layers of the insulating liquids of Examples 1 to 4. When the wet adhesion of an insulating liquid in the electrolyte was low, the release and swelling of the insulating liquid may occur during storage at high temperatures, and thus the capacity of a cathode might be exhibited, and the higher the high-temperature discharge capacity ratio, the lower the insulating effect. The insulating liquids of Comparative Examples 1, 2, and 6 to 8 had low wet adhesion in an electrolyte, and thus the release and swelling of the insulating liquids occurred during storage at high temperatures, and thus the capacity of a cathode may be exhibited.

### [Experimental Example 7] Moisture effect evaluation

A slurry for a cathode mixture layer was prepared by weighing 96 parts by weight of LiNi_{0.8}Co_{0.2}Mn_{0.2}O₂ as a cathode active material, 2 parts by weight of PVDF as a binder, and 2 parts by weight of carbon black as a conducting agent and mixing the same in an N-methyl pyrrolidone (NMP) solvent.

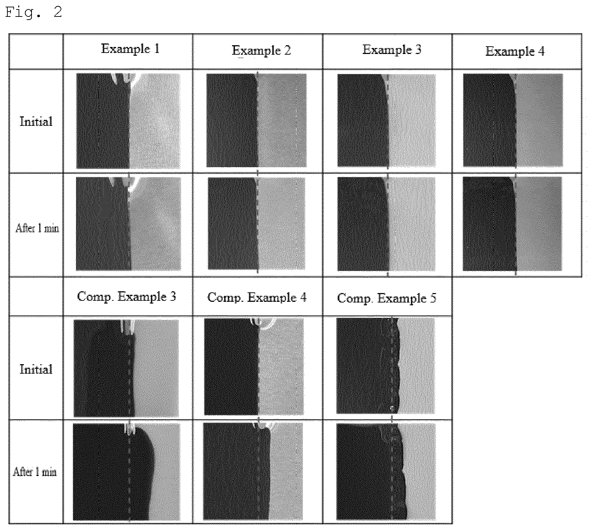

The slurry for a cathode mixture layer and the slurry for an insulating coating layer prepared in each of Examples 1 to 4 and Comparative Examples 3 to 5 were simultaneously applied to a current collector by using a doctor blade such that the slurries overlaid. The conditions immediately after application and 1 min after application were compared and the results are shown in Table 2 and FIG. 2. As show in FIG. 2, Examples 1 to 4 maintained initially coated conditions without permeation at an overlay portion immediately after application and 1 min after application, but Comparative Examples 3 to 5 having a moisture content of 10000 ppm or more failed to straightly maintain the coating boundaries since the electrode slurries permeated into insulating layers. Especially, in Comparative Example 5 without dispersion solvent replacement showed agglomeration by moisture, from immediately after application, in a portion where the cathode slurry and the insulating liquid met, and therefore, it could be confirmed that an aqueous insulating liquid without solvent replacement cannot be simultaneously coated with the cathode slurry.

As the moisture content of the slurry for a cathode insulating coating layer was higher, the slurry for a cathode mixture layer permeated into the slurry for a cathode insulating coating layer when the slurry for a cathode mixture layer and the slurry for a cathode insulating coating layer were simultaneously coated, and therefore, the insulation effects to be expected were difficult to show.

## Claims

1. An insulation-layer forming composition for a lithium secondary battery, the composition comprising:
a conjugated diene copolymer as a binder polymer; and
a non-aqueous organic solvent as a dispersion solvent,
wherein the conjugate diene copolymer has a Tg of -10°C to 40°C.

2. The composition of claim 1, wherein conjugated diene copolymer particles having an average particle diameter of 50 nm to 500 nm are present in an independent phase.

3. The composition of claim 1, wherein the conjugated diene copolymer comprises a polymerized product of one or more monomers selected from the group consisting of: (a) a conjugated diene-based monomer or a conjugated diene-based polymer; (b) one or more monomers selected from the group consisting of acrylate-based monomers, vinyl-based monomers, and nitrile-based monomers; and (c) unsaturated carboxylic acid-based monomers and hydroxy group-containing monomers.

4. The composition of claim 3, wherein the conjugated diene-based monomer is one monomer selected from the group consisting of 1,3-butadiene, isoprene, chloroprene, and piperylene, and
the conjugated diene-based polymer is a polymer of two or more monomers selected from the group consisting of 1,3-butadiene, isoprene, chloroprene, and piperylene, a styrene-butadiene copolymer, an acrylonitrile-butadiene copolymer, a styrene-isoprene copolymer, an acrylate-butadiene rubber, an acrylonitrile-butadiene-styrene rubber, an ethylene-propylene-diene polymer, or a partially epoxidized or brominated polymer of the forgoing polymers, or mixtures thereof.

5. The composition of claim 3, wherein the acrylate-based monomer is at least one monomer selected from the group consisting of methylethacrylate, methacryloxy ethylethyleneurea, β-carboxy ethylacrylate, aliphatic monoacrylate, dipropylene diacrylate, ditrimethylolpropane tetraacrylate, dipentaerythriol hexaacrylate, pentaerythriol triacrylate, pentaerythriol tetraacrylate, and glycidyl methacrylate.

6. The composition of claim 3, wherein the vinyl-based monomer is at least one monomer selected from the group consisting of styrene, α-methylstyrene, β-methylstyrene, p-t-butylstyrene, and divinyl benzene.

7. The composition of claim 3, wherein the nitrile-based monomer is at least one monomer selected from the group consisting of acrylonitrile, methacrylonitrile, and allyl cyanide.

8. The composition of claim 3, wherein the unsaturated carboxylic acid-based monomer is at least one monomer selected from the group consisting of maleic acid, fumaric acid, methacrylic acid, acrylic acid, glutaric acid, itaconic acid, tetrahydrophthalic acid, corotonic acid, isocrotonic acid, and nadic acid.

9. The composition of claim 3, wherein the hydroxy group-containing monomer is at least one monomer selected from the group consisting of hydroxy acrylate, hydroxyethyl acrylate, hydroxybutyl acrylate, hydroxypropyl acrylate, hydroxyethyl methacrylate, hydroxypropyl methacrylate, and hydroxybutyl methacrylate.

10. The composition of claim 1, wherein the conjugated diene copolymer contains a polymerized product of, based on the total weight thereof, 20 to 45 wt% of the conjugated diene-based monomer or conjugated diene-based polymer (a), 50 to 70 wt% of the one or more monomers selected from the group consisting of acrylate-based monomers, vinyl-based monomers, and nitrile-based monomers (b), and 1 to 20 wt% of the one or more monomers selected from the group consisting of unsaturated carboxylic acid-based monomers and hydroxy group-containing monomers (c).

11. The composition of claim 1, wherein the non-aqueous organic solvent is at least one selected from the group consisting of N-methyl-pyrrolidone (NMP), dimethylformamide (DMF), dimethylacetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methylpropyl carbonate (MPC), ethylpropyl carbonate (EPC), acetonitrile, dimethoxyethane, tetrahydrofuran (THF), γ-butyrolactone, methyl alcohol, ethyl alcohol, and isopropyl alcohol.

12. The composition of claim 1, wherein the conjugate diene copolymer is a styrene-butadiene copolymer, and
the non-aqueous organic solvent is N-methyl-pyrrolidone (NMP) .

13. The composition of claim 1, wherein a moisture content of the composition is 10,000 ppm or less.

14. A method for manufacturing a cathode for a lithium secondary battery, the method comprising:
preparing a water-dispersed conjugated diene latex;
adding a non-aqueous organic solvent to the water-dispersed conjugated diene latex, followed by warming and decompression, to prepare a slurry for an insulating coating layer;
applying a slurry for a cathode mixture layer on one or both surfaces of a cathode current collector, the slurry for a cathode mixture layer containing a cathode active material, a conductor, and a non-aqueous binder;
applying the slurry for an insulating coating layer to cover a partial region of the slurry for a cathode mixture layer applied to the cathode current collector, from a partial region of a non-coated part of the cathode current collector; and
drying the slurry for a cathode mixture layer and the slurry for an insulating coating layer applied to the cathode current collector.

15. The method of claim 14, wherein the preparing of the slurry for an insulating coating layer comprises replacing water, which is a dispersion solvent of conjugated diene latex particles, with a non-aqueous organic solvent.

16. The method of claim 15, wherein the conjugated diene latex particles maintain a particle shape even after the dispersion solvent is replaced with the non-aqueous organic solvent.

17. The method of claim 14, wherein the conjugated diene latex are styrene-butadiene latex particles, and
the non-aqueous organic solvent is N-methyl-pyrrolidone (NMP) .

18. A cathode for a lithium secondary battery, comprising:
a cathode current collector;
a cathode tap protruding from the cathode current collector; and
an insulating layer coated on the cathode tap and formed of an insulating material,
wherein the insulating material contains the composition of claim 1.

19. A lithium secondary battery comprising the cathode for a lithium secondary battery of claim 18.
